# FASCICULE DE BREVET EUROPEEN

(11) **EP 1 790 071 B1**
(45) Date de publication et mention de la délivrance du brevet: **30.01.2019**
(21) Numéro de dépôt: 05800599.2
(22) Date de dépôt: 31.08.2005
(51) Int. Cl.: H02P 9/10, H02H 7/06, H02P 7/00

(54) **MODULE DE COMMANDE ET DE PUISSANCE POUR UNE MACHINE ELECTRIQUE TOURNANTE**
STEUER- UND STROMVERSORGUNGSMODUL FÜR EINE ROTIERENDE ELEKTRISCHE MASCHINE
CONTROL AND POWER MODULE FOR A ROTATING ELECTRICAL MACHINE

(30) Priorité: 31.08.2004 FR 0409212
(43) Date de publication de la demande: 30.05.2007
(73) Titulaire: VALEO EQUIPEMENTS ELECTRIQUES MOTEUR, 94017 Créteil Cedex (FR)
(72) Inventeur: CHEMIN, Michaël, F-51700 Festigny (FR); BERNARD, François-Xavier, F-94000 Créteil (FR); LEROUX, Frédéric, F-94000 Créteil (FR)
(74) Mandataire: de Lambilly Delorme, Marie Pierre
(86) Numéro de dépôt international: PCT/FR2005/002178
(87) Numéro de publication internationale: WO 2006/027481

(56) Documents cités:
- EP-A- 1 443 623
- US-A- 4 815 052
- US-A- 5 793 167
- US-A1- 2002 171 401

## Description

### Domaine de l'invention

La présente invention concerne de manière générale la protection des réseaux électriques contre le délestage de charge. Elle s'applique en particulier dans le domaine automobile.

### Etat de la technique

Dans un véhicule automobile, un réseau électrique appelé "réseau de bord" sert à alimenter les équipements électriques dont est équipé le véhicule. Un tel réseau de bord est assimilable à un bus d'alimentation en tension continue. L'alimentation est fournie par au moins une batterie. Celle-ci est rechargée grâce à une machine électrique tournante, à partir de l'énergie fournie par la rotation du moteur thermique du véhicule. Par machine électrique tournante, on entend de façon plus générale toute machine électrique tournante monophasée ou polyphasée utilisée pour la production de courant continu de sortie alimentant le réseau de bord. Il peut en particulier s'agir d'un alternateur ou encore d'un alterno-démarreur.

En cas de déconnexion brutale d'une charge électrique du réseau de bord, ou d'une batterie, ou des deux, il se crée un phénomène de délestage de charge ("load-dump" en anglais), qui occasionne une surtension sur le réseau de bord. En effet, une régulation d'un courant inducteur dans la machine ne pouvant agir assez rapidement à la suite du délestage de charge, la machine continue à délivrer le même courant de sortie alors que la consommation en courant du côté du réseau de bord a chuté.

Classiquement, la batterie du véhicule est une batterie 14 volts. En principe, grâce à sa faible résistance interne, elle limite à environ 17 volts les pics de tension qui se produisent sur le réseau de bord du véhicule en cas de délestage de charge. Ladite batterie absorbe ainsi les petites surtensions. Néanmoins, en cas de déconnexion de la batterie (due à la rupture d'un câble d'alimentation, par exemple), une surtension très élevée peut se produire sur le réseau de bord. En effet, le courant délivré par la machine charge les capacités (y compris les capacités parasites) reliées au réseau de bord, et par conséquent fait monter de façon importante la tension continue sur le réseau de bord. Cette surtension risque d'endommager les équipements électriques alimentés par le réseau de bord. C'est pourquoi tous les équipements électriques du véhicule sont dimensionnés pour résister à une tension maximale d'environ 32 volts, ce qui correspond à une surtension d'environ 20 volts.

On connaît diverses solutions permettant de limiter la tension sur le réseau de bord à une tension maximale admissible, c'est-à-dire la tension la plus élevée que peuvent supporter les équipements électriques du véhicule sans risque d'endommagement. Par exemple, le document WO 03/032465 propose un premier mode de réalisation utilisant pour des interrupteurs d'un circuit de puissance des transistors MOSFET de puissance qui sont calibrés en tension pour travailler par effet d'avalanche pour une tension déterminée, inférieure à la tension maximale admissible. Ainsi, en cas de délestage de charge, la limitation de la tension du réseau de bord est garanti par le passage en avalanche des transistors de puissance constituant les interrupteurs du pont de redressement. Le même document WO 03/032465 évoque aussi une solution classique consistant à rajouter des diodes Zener sur le réseau de bord pour limiter la tension du réseau de bord.

Le document EP1443623A1 divulgue une méthode pour contrôler la tension de charge et de décharge d'une machine synchrone.

D'autres solutions consistent à rajouter une charge additionnelle dans le réseau de bord pour absorber le surplus d'énergie en cas de délestage de charge.

Ces solutions connues présentent certains avantages, mais sont imparfaites dans le contexte de l'utilisation future de batteries 42 volts dans les véhicules, rendue nécessaire par la tendance à la multiplication des équipements électriques à forte consommation d'énergie. En effet, selon les spécifications d'une future norme européenne (encore en cours d'élaboration), les équipements électriques du réseau de bord du véhicule devront vraisemblablement être dimensionnés pour fonctionner jusqu'à une tension de 48 volts, et pour résister à une tension maximale de 58 volts, ce qui correspond à une surtension de seulement 10 volts.

Or, la tension de limitation ou d'écrêtage des transistors MOSFET est trop importante (supérieure à 58V) et n'est pas suffisamment maîtrisée pour permettre leur utilisation dans ce contexte. En effet, la valeur d'écrêtage des MOSFET dépend notamment d'un paramètre tel que la température.

De plus, en cas d'utilisation de diodes Zener avec les transistors MOS, celles-ci devraient pouvoir absorber des courants de plusieurs centaines d'ampères, d'où un encombrement et un surcoût important car il faut en ajouter plusieurs. Il en est de même pour les charges additionnelles.

### Objet de l'invention

L'invention vise donc à proposer un module de commande et de puissance pour machine électrique tournante selon la revendication 1 comprenant une pluralité d'enroulements de phases, ledit module comprenant :
- un circuit de puissance comprenant une pluralité de branches destinées à être associées à ladite pluralité d'enroulement de phases, et
- un circuit de commande construit pour piloter ledit circuit de puissance lorsque la machine fonctionne dans un mode nominal, qui soit une alternative aux solutions connues, pour obtenir une limitation de la tension sur le réseau de bord d'un véhicule automobile.

L'invention vise également à proposer un procédé de commande d'une machine électrique tournante mis en oeuvre dans le module de commande et de puissance.

A cet effet, selon un premier aspect de l'invention, le circuit de commande est construit pour, en outre :
- surveiller une tension de sortie dudit circuit de puissance;
- verrouiller au moins une branche dudit circuit de puissance dans un état de conduction lorsque ladite tension de sortie atteint une au moins première valeur de seuil de sorte que ladite machine fonctionne dans un mode dégradé.

Ainsi, le verrouillage d'au moins une branche du circuit de puissance a pour effet de diminuer le courant généré par l'alternateur. Cela permet de faire descendre la tension sur le réseau de bord, compte tenu de la consommation de courant par les équipements électriques qui lui restent connectés, en attendant que la régulation adapte le courant d'excitation injecté dans l'inducteur de la machine.

Dans un mode de réalisation non limitatif, le circuit de commande est construit pour, en outre rétablir le fonctionnement de la machine dans le mode nominal, lorsque ladite tension de sortie atteint une deuxième valeur de seuil. Ainsi, cela permet de revenir dans un mode de fonctionnement normal lorsqu'il n'existe plus de surtension.

Dans un mode de réalisation non limitatif, le circuit de commande est construit pour verrouiller toutes les branches du circuit de puissance lorsque la tension de sortie atteint une première valeur de seuil. Ainsi, la machine est court-circuitée. Elle ne débite plus aucun courant. De ce fait, la tension délivrée au réseau de bord chute rapidement et on limite ainsi une surtension.

Selon l'invention, le circuit de puissance comprend en outre des moyens d'accumulation d'énergie. Ces moyens sont un condensateur. Ainsi, ledit condensateur joue le rôle d'une mini batterie. En effet, il fournit du courant au réseau de bord alors que la machine ne génère plus ou pas suffisamment de courant. Ainsi, toutes les branches du circuit de puissance peuvent être verrouillées. Le courant délivré par la machine est alors nul, mais l'alimentation des équipements électriques connectés au réseau de bord est assurée par ce condensateur.

Dans un mode de réalisation non limitatif, ladite au moins première valeur de seuil est supérieure à la deuxième valeur de seuil. Ainsi, le mode dégradé est déclenché lorsque la tension de sortie du circuit de puissance dépasse une valeur qui est supérieure à celle de fonctionnement en mode nominal de la machine.

Dans un mode de réalisation non limitatif, la deuxième valeur de seuil est sensiblement égale à une valeur nominale d'une tension qui est délivrée par le circuit de puissance dans le mode nominal. Ainsi, on ne sort du mode dégradé que lorsque la valeur de la tension sur le réseau de bord a retrouvé sa valeur nominale.

Dans un mode de réalisation non limitatif, ladite au moins première valeur de seuil est inférieure à une tension de destruction d'équipements électriques destinés à être alimentés par la tension de sortie du circuit de puissance. Ainsi, ces équipements électriques sont protégés contre la destruction par surtension.

Dans un mode de réalisation non limitatif, le circuit de commande est adapté pour, lors d'un verrouillage d'une branche, maintenir ladite branche dans un premier état de conduction pendant une partie du temps de verrouillage, et maintenir ladite branche dans un deuxième état de conduction pendant le reste du temps de verrouillage. Ce mode de réalisation permet de répartir la dissipation thermique entre des composants d'une branche et ce de façon alternative. Ceci limite ainsi leur échauffement.

Dans un mode de réalisation non limitatif, ladite au moins une branche comporte deux interrupteurs, et dans un état de conduction déterminé de ladite branche, un des interrupteurs est conducteur et l'autre interrupteur est bloqué.

Dans un mode de réalisation non limitatif, le circuit de commande est adapté pour maintenir toutes les branches du circuit de puissance qui sont verrouillées dans un même état de conduction. Cela permet de court-circuiter un ou plusieurs enroulements de phase et donc de diminuer le courant généré par la machine.

Dans un mode de réalisation non limitatif, un interrupteur comporte au moins un transistor de puissance.

Dans un mode de réalisation non limitatif, le verrouillage de ladite au moins une branche s'effectue à une fréquence de verrouillage inférieure à une fréquence de fonctionnement du circuit de puissance en mode nominal. Ainsi, la machine génère un courant moindre ou plus aucun courant pendant le temps nécessaire pour que la tension sur le réseau de bord diminue suffisamment pour limiter une surtension.

Avantageusement, la présente invention n'ajoute pas de composants électroniques. De plus, elle permet de maintenir l'alimentation des composants électriques du réseau de bord en cas de délestage de charge.

Un second aspect de l'invention se rapporte à une machine électrique tournante réversible polyphasée comprenant un module de commande et de puissance selon le premier aspect ci-dessus.

Enfin, un troisième aspect de l'invention concerne un procédé de commande d'une machine électrique tournante adaptée pour fonctionner dans un mode nominal, ladite machine comprenant une pluralité d'enroulements de phases et un circuit de puissance comportant une pluralité de branches destinées à être associées à ladite pluralité d'enroulement de phases. Ledit procédé comporte les étapes de :
- surveiller une tension de sortie dudit circuit de puissance;
- verrouiller au moins une branche dudit circuit de puissance dans un état de conduction lorsque ladite tension de sortie atteint une au moins première valeur de seuil de sorte que ladite machine fonctionne dans un mode dégradé.

Dans un mode de réalisation non limitatif, ledit procédé comporte une étape supplémentaire de rétablir le fonctionnement de la machine dans le mode nominal, lorsque ladite tension de sortie atteint une deuxième valeur de seuil.

Dans un mode de réalisation non limitatif, dans l'étape de verrouillage, toutes les branches du circuit de puissance sont verrouillées lorsque ladite tension de sortie atteint une première valeur de seuil.

Dans un mode de réalisation non limitatif, lors de l'étape de verrouillage d'une branche, ladite branche est maintenue dans un premier état de conduction pendant une partie du temps de verrouillage, et elle est maintenue dans un deuxième état de conduction pendant le reste du temps de verrouillage.

Dans un mode de réalisation non limitatif, les branches verrouillées du circuit de puissance sont toutes maintenues dans un même état de conduction.

Dans un mode de réalisation non limitatif, l'étape de verrouillage de ladite au moins une branche s'effectue à une fréquence de verrouillage inférieure à une fréquence de fonctionnement du circuit de puissance en mode nominal.

### Brève description des Figures

D'autres caractéristiques et avantages de l'invention apparaîtront encore à la lecture de la description qui va suivre. Celle-ci est purement illustrative et doit être lue en regard des dessins annexés sur lesquels:
- la Fig. 1 est un schéma illustrant un mode de réalisation du module de commande et de puissance selon un premier aspect de la présente invention et de la machine électrique selon le second aspect de la présente invention;
- la Fig. 2 est un schéma d'un pont de transistors de puissance compris dans un exemple de réalisation d'un circuit de puissance appartenant au module de commande et de puissance de la Fig. 1;
- la Fig. 3 montre un graphe de la tension sur un réseau de bord d'un véhicule, et un graphe du courant d'excitation de la machine électrique dudit véhicule, en cas de délestage de charge, lorsque la présente invention est mise en oeuvre;
- la Fig. 4a et la Fig. 4b sont des schémas illustrant l'état du pont de transistors de la Fig. 2 dans deux configurations de verrouillage de toutes les branches, selon un mode de réalisation de la présente invention;
- la Fig. 5 est un schéma illustrant un montage réalisé en pratique pour tester le fonctionnement d'un module de commande et de puissance de la Fig. 1; et,
- la Fig. 6 et la Fig. 7 sont des graphes de la tension sur le réseau de bord et du courant d'excitation de la machine électrique, pour des conditions de test respectives du montage de la Fig. 5.

### Description détaillée de modes de réalisation préférentiels de l'invention

La présente invention va maintenant être décrite dans le cadre de son application à la commande d'une machine électrique tournante polyphasée telle que l'une de celles mentionnées en introduction. On ne s'intéresse ici qu'au mode de fonctionnement en alternateur de ces machines. Ce mode est le seul mode de fonctionnement pour un alternateur. C'est l'un des modes de fonctionnement possibles pour les machines des autres types. Pour la suite de la description, on prend l'exemple non limitatif d'un alterno-démarreur 30, machine réversible.

Par ailleurs, pour la suite de la description, un équipement électrique pourra être appelé indifféremment consommateurs ou charges.

Un alterno-démarreur 30 comporte trois modes de fonctionnement. Un mode repos, un mode alternateur appelé également mode générateur et un mode moteur comprenant un mode démarreur, connus de l'homme du métier.

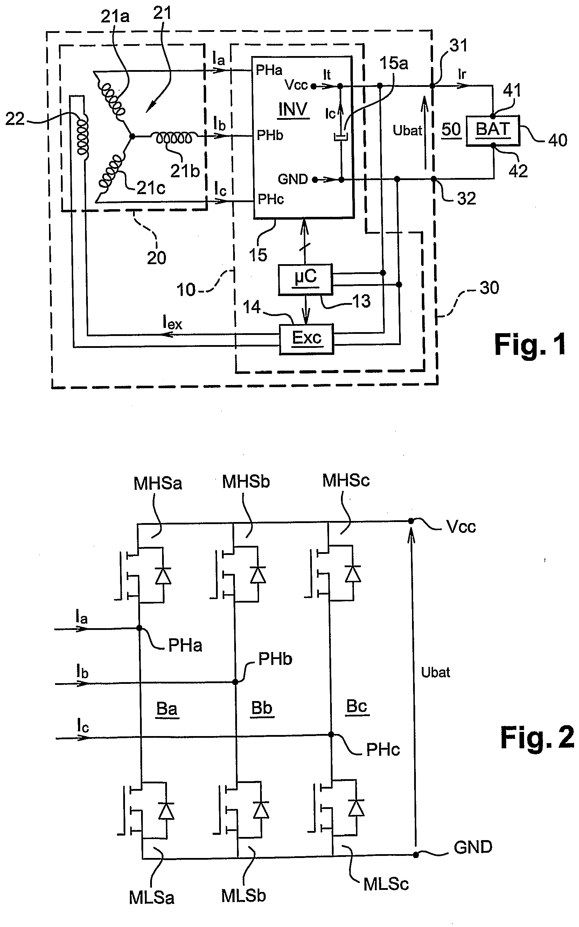

La Fig. 1 montre de façon schématique un alterno-démarreur 30 selon l'invention. L'alterno-démarreur 30 est installé dans un véhicule (non représenté) comportant un réseau électrique 50 appelé également réseau de bord.

L'alterno-démarreur 30 comprend :
- une partie électromécanique 20,
- une partie électronique formant module de commande et de puissance 10,
- une borne d'alimentation haute 31, et
- une borne d'alimentation basse 32.

Les deux bornes 31 et 32 sont respectivement reliées à une borne positive 41 et à une borne négative 42 d'une batterie 40, à travers le réseau électrique 50. Dans un exemple non limitatif, la batterie 40 est une batterie 42 volts. On note B+ et B- les potentiels électriques sur les bornes 41 et 42, respectivement. Classiquement, la borne 42 est connectée au châssis du véhicule en sorte que le potentiel B- se confond avec le potentiel de masse. On note Ubat la tension batterie, c'est-à-dire la différence de potentiel électrique entre les bornes 41 et 42 de la batterie 40. Cette tension est la tension disponible sur le réseau de bord 50, et entre les bornes 31 et 32 de l'alterno-démarreur, sauf évidemment en cas de déconnexion de la batterie. Néanmoins, par abus de langage, on désignera toujours par Ubat la tension sur le réseau de bord 50 et entre les bornes 31 et 32 de l'alterno-démarreur, même en cas de déconnexion de la batterie. Dans l'exemple pris, la batterie 40 est une batterie 42V qui permet d'alimenter des gros consommateurs, comme par exemple des composants électroniques d'un chauffage électrique ou d'une climatisation, ou encore un convertisseur DC/DC. On notera que tous les consommateurs électriques ne sont pas forcément dimensionnés à 42V mais certains peuvent rester dimensionnés pour 12V, comme par exemple un autoradio, des essuie-glaces ou encore des contrôleurs de véhicule. Dans ce cas, il existe une seconde batterie (non représentée) 12V et un convertisseur DC/DC entre la première batterie 42V et la deuxième batterie 12V, ledit convertisseur permettant de convertir la puissance délivré par l'alterno-démarreur 30 en 12V.

La partie électromécanique 20 de l'alterno-démarreur comprend :
- un élément induit 21, et
- un élément inducteur 22.

Dans un exemple, l'induit 21 est le stator, et l'inducteur 22 est le rotor. Le stator 21 comprend un nombre N d'enroulements de phase. Dans l'exemple considéré ici, N est égal à 3. Dit autrement, l'alterno-démarreur 30 selon le présent exemple de réalisation est une machine à inducteur rotorique, et à induit statorique triphasé. Dans l'exemple illustré à la Fig. 1, les enroulements de phase 21a, 21b et 21c de l'élément induit 21 sont disposés selon une configuration en étoile, la tension sur l'extrémité commune des trois enroulements de phase étant ici flottante. Néanmoins, ceci n'est pas limitatif, une configuration en anneau, par exemple en triangle, étant également envisageable.

Le module de commande et de puissance 10 comprend :
- un circuit de commande 13,
- un circuit d'excitation 14 générant un courant d'excitation lex qui est injecté dans l'élément inducteur 22, et
- un circuit électronique de puissance 15.

Dans un mode de réalisation non limitatif, le circuit de commande 13 comprend un microcontrôleur. Ce microcontrôleur reçoit la tension disponible entre les bornes d'alimentation 31 et 32 de l'alterno-démarreur, c'est-à-dire la tension Ubat sur le réseau de bord 50, par exemple sur une entrée analogique couplée à un convertisseur analogique-numérique interne. La tension Ubat est ainsi surveillée par le circuit de commande 13. On a ainsi facilement accès à ladite tension Ubat.

Le circuit d'excitation 14 peut comprendre un assemblage de composants électroniques. Sa conception est connue en soi, et n'a pas besoin d'être décrite plus en détail ici.

Le circuit de puissance 15 comprend :
- une entrée/sortie d'alimentation haute, notée VCC,
- une entrée/sortie d'alimentation basse, notée GND,
- trois entrées/sorties de phase PHa, PHb et PHc, et
- un pont d'interrupteurs et son électronique de commande, appelé également pont redresseur lorsque la machine fonctionne en mode alternateur et onduleur lorsque la machine fonctionne en mode moteur.

La première entrée/sortie d'alimentation VCC est couplée à la borne d'alimentation haute 31 de l'alterno-démarreur, pour recevoir le potentiel B+. La deuxième entrée/sortie d'alimentation GND est couplée à la borne d'alimentation basse 32 de l'alterno-démarreur, pour recevoir le potentiel B-. Ainsi, la tension Ubat est disponible entre les entrées/sorties VCC et GND du circuit de puissance 15.

En fonctionnement, les trois entrées/sorties de phase PHa, PHb et PHc sont couplées à l'extrémité libre d'un des enroulements de phase respectivement 21a, 21b et 21c, dans la configuration en étoile du stator qui est envisagée ici. En cas de configuration en anneau du stator, les entrées/sorties PHa, PHb et PHc sont couplées chacune à l'un des noeuds communs à deux enroulements de phase. Dans tous les cas, les entrées/sorties PHa, PHb et PHc reçoivent les courants induits dans les enroulements de phase 21a, 21b et 21c par la rotation de l'inducteur 22, ou délivrent dans ces enroulements des courants tirés sur la batterie 40. Par la suite et sur les figures, on notera Ia, Ib et Ic ces courants.

Dans un mode de réalisation non limitatif, le pont d'interrupteurs est illustré par le schéma de la Fig. 2. L'électronique de commande (non représentée) comprend en particulier des circuits pilotes ("driver" en anglais). Elle est connue en soi, si bien qu'elle n'a pas besoin d'être décrite plus en détail ici.

Le pont d'interrupteurs comporte trois branches Ba, Bb et Bc, respectivement associées aux trois enroulements de phase 21a, 21b et 21c de l'induit 21.

Dans un mode de réalisation préférentiel non limitatif, chaque branche comprend deux interrupteurs. Un interrupteur comporte au moins un transistor de puissance. Préférentiellement, un interrupteur comporte une pluralité de transistors disposés en parallèle. Cela permet d'avoir moins de perte par effet joule. Les transistors de puissance sont par exemple des transistors MOSFET. En variante il peut s'agir de transistors IGBT (de l'anglais "Insulated Gate Bipolar Transistor") ou de transistors bipolaires de puissance.

Ainsi, dans un mode de réalisation non limitatif, la branche Ba du pont d'interrupteurs comprend un transistor supérieur MHSa (ou transistor "High Side") en série avec un transistor inférieur MLSa (ou transistor "Low Side") entre les entrées/sorties VCC et GND. Il s'agit par exemple de transistors NMOS.

Le drain et la source du transistor MHSa sont respectivement reliés à l'entrée/sortie VCC et à l'entrée/sortie PHa du circuit de puissance 15. De même, le drain et la source du transistor MLSa sont respectivement reliés à l'entrée/sortie PHa et à l'entrée/sortie GND du circuit de puissance 15. Dit autrement, le drain du transistor MLSa et la source du transistor MHSa, qui sont reliés ensemble, forment le noeud de sortie de la branche Ba qui est relié à l'entrée/sortie PHa du circuit de puissance 15.

De même, la branche Bb du pont de transistors comprend un transistor supérieur MHSb en série avec un transistor inférieur MLSb entre les entrées/sorties VCC et GND. Il s'agit aussi de transistors NMOS. Le drain et la source du transistor MHSb sont respectivement reliés à l'entrée/sortie VCC et à l'entrée/sortie PHb du circuit de puissance 15. De même, le drain et la source du transistor MLSb sont respectivement reliés à l'entrée/sortie PHb et à l'entrée/sortie GND du circuit de puissance 15. Dit autrement, le drain du transistor MLSb et la source du transistor MHSb, qui sont reliés ensemble, forment le noeud de sortie de la branche Bb qui est relié à l'entrée/sortie PHb du circuit de puissance 15.

Enfin, la branche Bc du pont de transistors comprend un transistor supérieur MHSc en série avec un transistor inférieur MLSb entre les entrées/sorties VCC et GND. Il s'agit encore de transistors NMOS. Le drain et la source du transistor MHSc sont respectivement reliés à l'entrée/sortie VCC et à l'entrée/sortie PHc du circuit de puissance 15. De même, le drain et la source du transistor MLSc sont respectivement reliés à l'entrée/sortie PHc et à l'entrée/sortie GND du circuit de puissance 15. Dit autrement, le drain du transistor MLSc et la source du transistor MHSc, qui sont reliés ensemble, forment le noeud de sortie de la branche Bc qui est relié à l'entrée/sortie PHc du circuit de puissance 15.

On notera que pour les transistors supérieurs ou les transistors inférieurs, il peut s'agir d'un ensemble de transistors disposés en parallèle comme décrit plus haut.

Chaque branche Ba, Bb et Bc comporte deux états de conduction possibles. Ces deux états correspondent chacun à un sens de circulation du courant respectivement la, Ib et Ic au niveau de l'entrée/sortie respectivement PHa, Phb et PHc du circuit de puissance 15, à laquelle elle est couplée. Le premier état, appelé état de conduction « haut », correspond à l'état conducteur du transistor de puissance supérieur et à l'état bloqué du transistor de puissance inférieur de la branche. Ainsi, pour la première branche Ba par exemple, le courant la associé circule de l'enroulement de phase 21a vers l'entrée/sortie d'alimentation haute VCC. Réciproquement, le deuxième état, appelé état de conduction « bas», correspond à l'état conducteur du transistor de puissance inférieur et à l'état bloqué du transistor de puissance supérieur de la branche. Ainsi, le courant associé la circule de l'entrée/sortie basse GND vers l'enroulement de phase 21a. On rappellera que les courants induits Ia, Ib, et Ic sont des courants alternatifs.

Le fonctionnement de l'alterno-démarreur 30 va maintenant être décrit.

En mode de fonctionnement alternateur, lorsque l'alterno-démarreur fonctionne dans les conditions normales, i.e. en mode nominal, un courant It est généré (représenté à la Fig. 1) par la rotation de l'alterno-démarreur lorsqu'il est entraîné par le moteur thermique. L'alterno-démarreur 30 est alors commandé pour redresser les courants induits la, Ib et Ic et réguler le courant inducteur Iex, et par suite le courant généré It. On rappellera que l'amplitude des courant induits la, Ib et Ic est fonction du courant inducteur Iex et le courant généré It est fonction des trois courants induits redressés.

Afin d'effectuer ladite régulation (représenté à la Fig. 1) par la machine, on effectue un hachage ou découpage du courant inducteur Iex par le circuit d'excitation 14 à une fréquence d'environ 100Hz. On régule ainsi le couple prélevé par la machine sur le moteur thermique et donc la puissance générée par ladite machine.

Par ailleurs, afin d'effectuer le redressement, on utilise le pont d'interrupteurs du circuit de puissance 15. Il permet d'effectuer un redressement des courants induits Ia, Ib, Ic. A cet effet, soit le circuit de commande 13 pilote une commutation des interrupteurs du pont à une fréquence électrique de la machine de l'ordre du kHz (redressement synchrone), soit lesdits interrupteurs fonctionnent en pont de diodes classique, les interrupteurs étant à ce moment tous en position bloqués. Le redressement synchrone ainsi que le fonctionnement en pont de diode étant connus de l'homme du métier, ils ne seront pas décrits en détail.

On rappellera par ailleurs que la fréquence électrique de la machine est fonction de la fréquence de vitesse du moteur thermique, du nombre de paires de pôles du rotor et du rapport de courroie, ladite courroie étant disposée sur un arbre du rotor et permettant de manière connue une coopération entre la machine et le moteur thermique.

Ainsi, la fréquence électrique de la machine qui correspond donc à la fréquence de fonctionnement du circuit de puissance, est adaptée pour un fonctionnement efficace dans le mode alternateur, c'est-à-dire pour optimiser la génération de courant It.

On notera qu'en mode repos, c'est-à-dire lorsque le véhicule est à l'arrêt, tous les interrupteurs des branches sont ouverts.

Par ailleurs, on notera qu'en mode moteur, il existe un hachage de la tension batterie Ubat, et ce généralement à 20 KHz. Cela permet de réguler les courants induit Ia, Ib, Ic de la machine et le courant inducteur Iex et par suite le couple fourni par la machine, ladite machine prélevant du courant sur la batterie. Un tel hachage peut perturber l'ensemble du réseau de bord et la batterie. Aussi, afin de stabiliser la tension batterie Ubat, le circuit de puissance 15 comporte une capacité de filtrage de valeur généralement élevée disposée entre les entrées/sorties d'alimentation VCC et GND. Il s'agit par exemple d'une capacité de 50 mF. Cette valeur étant relativement élevée, on prévoit que ladite capacité comporte au moins un condensateur discret 15a pour cette fonction, par exemple un condensateur chimique.

En plus du mode nominal, l'invention propose un mode dégradé, dans lequel on fait fonctionner la machine en réponse à un délestage de charge.

De retour au mode alternateur, lorsque la machine génère un courant It pour alimenter un nombre déterminé d'équipements électriques dans le véhicule, et qu'un des équipements vient à être coupé, il existe un temps de réaction Tt de la machine pour réguler le courant généré It. Ainsi, en cas de coupure d'un petit équipement électrique, i.e. consommant peu de courant, par exemple des essuie-glaces, une petite surtension apparaît de façon transitoire sur le réseau de bord, laquelle est facilement absorbée par la batterie 40 qui sert alors de tampon pendant le temps de réaction Tt de la machine pour la régulation.

Néanmoins, en cas de coupure d'un gros équipement électrique i.e. consommant beaucoup de courant, par exemple, un pare-brise chauffant, et/ou en cas de déconnexion de la batterie 40 lorsqu'elle est déchargée (connexion de la borne 31 coupée), il se produit ce qu'on appelle un délestage de charge ("load-dump" en anglais) occasionnant de façon transitoire une surtension pouvant atteindre une valeur élevée (cette surtension est parfois appelée "overshoot" dans le jargon de l'homme du métier) et qui peut griller ainsi tous les équipements électriques reliés audit réseau de bord.

On notera que l'expression "de façon transitoire" ci-dessus se réfère au fait que la surtension a lieu seulement pendant le temps nécessaire pour que le courant d'excitation Iex injecté dans l'inducteur 22 soit réduit, i.e. pendant le temps de réaction Tt de la machine décrit plus haut. Cette réduction provient de la régulation par le circuit d'excitation 14 visant à faire en sorte que le courant de sortie It de l'alterno-démarreur corresponde au courant qui reste consommé Ir (représenté à la Fig. 1) dans la partie du réseau de bord 50 à laquelle l'alterno-démarreur 30 reste connecté.

On notera que le courant consommé Ir représente l'ensemble des courants consommés dans les équipements électriques plus celui consommé dans la batterie.

Par ailleurs, on notera que la batterie 40 est assimilable à un gros consommateur dans le cas où elle est déchargée car elle consomme à ce moment beaucoup de courant pour se recharger, et est assimilable à un petit consommateur dans le cas où elle est complètement chargée.

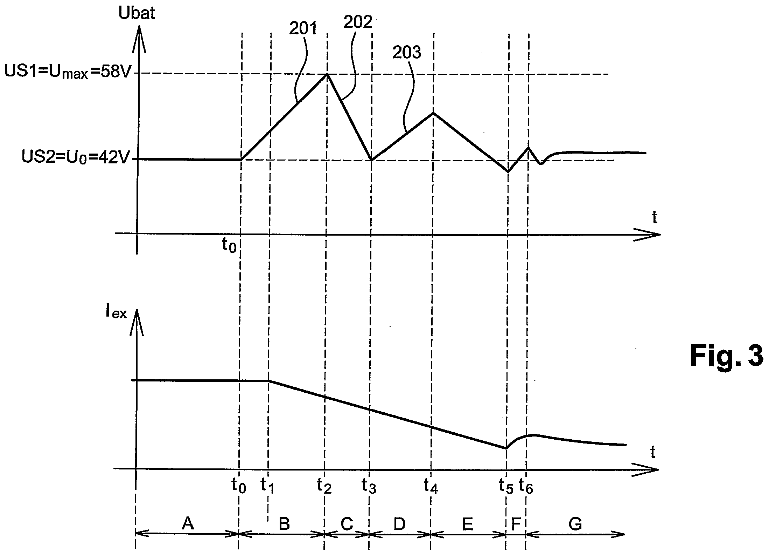

Un délestage de charge et la régulation du courant d'excitation Iex qui s'ensuit sont illustrés à la Fig. 3.

Sur cette Fig. 3 est illustrée l'évolution de la tension de sortie Ubat et du courant d'excitation Iex suite au délestage de charge, à la régulation du courant et au fonctionnement en mode dégradé de l'alterno-démarreur.
- Dans la plage A représentée à la Fig. 3, la tension Ubat est égale à la tension nominale de fonctionnement U0, c'est-à-dire 42Volts dans l'exemple pris, et le courant d'excitation Iex est tel que le courant généré It est égal au courant consommé Ir. On se trouve en mode nominal.
- A l'instant t₀ un délestage de charge se produit, par exemple du à la déconnexion de la batterie 40 déchargée ou de la déconnexion de la batterie plus une autre charge. Le courant généré It devient alors supérieur au courant consommé Ir. A ce moment, la capacité du condensateur 15a (ainsi que les autres capacités sur tous les autres composants électroniques, y compris les capacités parasites, couplées au réseau de bord) se charge avec la différence entre le courant généré It et le courant consommé Ir, soit It-Ir. Par conséquent, la tension Ubat augmente et devient donc supérieure à la tension nominale U0.
- Très peu de temps après l'instant t₀, à l'instant t₁, le courant d'excitation Iex diminue en raison de la régulation effectuée par le circuit de commande 13 via le circuit d'excitation 14, ledit circuit de commande 13 s'étant aperçu de l'augmentation de la tension Ubat au dessus de la tension nominale U0.

Dans l'exemple pris, la tension Ubat continue néanmoins de monter car le courant d'excitation Iex est toujours trop haut. Le courant généré It est toujours supérieur au courant consommé Ir.

On notera que la pente 201 de la tension Ubat à partir de l'instant t₀ dépend de la différence (positive) entre le courant généré It par l'alterno-démarreur et le courant consommé Ir dans le réseau de bord, et de la capacité du condensateur 15a (ainsi que des autres capacités sur tous les autres composants électroniques, y compris les capacités parasites, couplées au réseau de bord).

Ainsi, dans la plage B représentée, It> Ir, on se trouve toujours en mode nominal et la capacité du condensateur 15a se charge.
- Lorsque, à un instant t₂, Ubat atteint (par valeurs inférieures) une première valeur de seuil US1, le circuit de commande 13 commande le fonctionnement du circuit de puissance 15 dans un mode dégradé, i.e. on diminue les performances de la machine jusqu'à dans un certain cas les annuler, comme nous allons voir en détail plus loin.

Dans ce mode de fonctionnement dégradé au moins l'une des branches Ba, Bb et Bc du circuit de puissance est verrouillée, en étant maintenue dans l'un de ses deux états de conduction.

Le terme "maintenue" doit être apprécié par référence à la fréquence de pilotage Fq2 du circuit de puissance dans le mode nominal. Dit autrement, une branche est considérée comme verrouillée lorsqu'elle est commandée pour rester dans l'un de ses deux états de conduction pendant une durée correspondant à plusieurs périodes de pilotage en mode nominal.

Dit autrement, la fréquence de verrouillage Fq1 est inférieure à la fréquence de fonctionnement Fq2 du circuit de puissance (ou fréquence électrique de la machine) dans le mode nominal, ladite fréquence de fonctionnement Fq2 étant réglée à quelques kHz. Dans un mode de réalisation non limitatif, la fréquence de verrouillage Fq1 se situe entre 10Hz et 100hz, correspondant à une période comprise entre 10ms et 100ms.

L'effet obtenu est, à courant Iex constant, une réduction du courant généré It par l'alterno-démarreur. Ainsi, le courant d'excitation Iex est réduit non seulement par la régulation classique, mais aussi par le verrouillage de la ou les branches du pont d'interrupteurs.

Dans un mode de réalisation non limitatif, afin de répartir les pertes par échauffement entre le transistor de puissance supérieur MHS et le transistor de puissance inférieur MLS de la branche, la branche peut, lors d'une phase de verrouillage, être commandée pour passer d'un état de conduction à l'autre. Ainsi, le transistor supérieur MHS est maintenu conducteur et le transistor inférieur MLS est maintenu bloqué pendant une partie du temps de verrouillage et inversement (transistor supérieur bloqué, transistor inférieur conducteur) pendant l'autre partie du temps du verrouillage. Les temps peuvent, par exemple, être répartis à 50%-50% ou à 10%-90%. Bien entendu, toute autre répartition peut être envisagée.

De plus, dans un mode de réalisation non limitatif, selon l'état de conduction des branches du pont d'interrupteur avant le délestage de charge, on peut choisir de minimiser les commutations d'interrupteurs à effectuer lors du mode dégradé. Par exemple, si, avant le délestage de charge, les deux branches Ba et Bb étaient dans l'état de conduction « haut », et la troisième branche Bc dans l'état de conduction « bas », pour passer en mode dégradé, il suffit de mettre la troisième branche dans l'état de conduction « haut » et verrouiller l'ensemble si on veut verrouiller toutes les branches.

On notera que lorsque plusieurs branches du circuit de puissance 15 sont verrouillées, le circuit de commande 13 maintient lesdites branches dans un même état de verrouillage, i.e. dans un même état de conduction. Ainsi, par exemple, tous les transistors supérieurs MHS des branches verrouillées sont conducteurs et tous les transistors inférieurs MLS desdites branches sont bloqués.

Ainsi, la réduction du courant généré It par l'alterno-démarreur procurée par le verrouillage d'une ou de plusieurs branches du circuit de puissance, en combinaison avec la réduction procurée par la régulation (baisse du courant Iex commandée par le circuit 13 via le circuit 14), a pour effet de faire descendre la tension Ubat dans le cas où la consommation de courant Ir dans les équipements électriques qui restent connectés au réseau de bord 50 est supérieure au courant généré It par l'alterno-démarreur.

Ainsi, dans le cas où le courant consommé Ir par le réseau de bord est supérieur au courant généré It par l'alterno-démarreur, pour assurer l'alimentation des équipements électriques connectés au réseau de bord 50 qui doivent rester en service, on peut prévoir une capacité en parallèle sur le réseau de bord 50. Cette capacité joue le rôle de moyens d'accumulation qui restitue aux organes consommateurs (dimensionnés en 42V, en particulier le convertisseur DC/DC) du véhicule pendant le mode dégradé, l'énergie accumulée pendant la phase de montée de la tension Ubat consécutive au délestage de charge. Ainsi, cette capacité est choisie de manière à alimenter les consommateurs pendant toutes les durées où la machine est en court-circuit. On notera que dans le cas où cette capacité extérieure se déconnecte, la fonction de détection de surtension protège toujours le réseau de bord mais aussi le pont redresseur.

Ici, le condensateur 15a du module de commande et de puissance 10 peut avantageusement remplir cette fonction supplémentaire, en plus de sa fonction de condensateur de filtrage de la fréquence de hachage de la tension Ubat quand l'alterno-démarreur est en mode nominal. Il n'y a donc pas besoin d'un composant supplémentaire dédié à cette fonction d'accumulateur. Ainsi, le courant consommé Ir est égal au courant généré It plus le courant Ic traversant le condensateur (représenté à la Fig. 1). Par convention, on prendra le condensateur 15a en tant que générateur. Quand il se décharge, le courant Ic est positif. Quand il se charge, le courant Ic est négatif. Sur la Fig. 1, le courant Ic est représenté positif.

Dans le cas contraire où le courant généré It par l'alterno-démarreur est supérieur au courant consommé Ir par les équipements électriques, la tension de sortie Ubat continue d'augmenter bien que le courant généré It diminue. A ce moment il est nécessaire de verrouiller encore une autre branche jusqu'à ce que la tension Ubat diminue.

Ainsi, dans un mode de réalisation avantageux, si la tension de sortie Ubat atteint, par valeurs inférieures, une première valeur de seuil US1 égale à une tension de seuil maximale Umax, on verrouille toutes les branches du circuit de puissance 15. On prendra par exemple comme valeur maximale 58Volts. Dans ce cas, tous les enroulements de phase de l'induit 21 sont court-circuités, en sorte que le courant total généré It par l'alterno-démarreur est nul. La décroissance de la tension Ubat sur le réseau de bord 50 est alors la plus rapide, comme indiqué sur la Fig. 3, plage C entre les temps t₂ et t₃.

Comme on l'aura compris, dans un mode de réalisation préférentiel non limitatif, la tension de seuil maximale Umax est sensiblement égale, par valeur inférieure, à la tension maximale admissible par les équipements électriques reliés au réseau de bord 50 auquel la machine est connectée, afin que leur protection contre la destruction soit effective.

De plus, préférentiellement, la tension de seuil maximale Umax est également inférieure à une tension de destruction des composants électroniques du pont redresseur.

Dans un autre de mode de réalisation non limitatif, la valeur de seuil maximale n'est pas forcément choisie en considération de la tension de destruction des équipements électriques connectés au réseau de bord, pris à 58V dans notre exemple, mais on peut la limiter à une valeur moindre, par exemple 52V ce qui limiterait la surtension dans le réseau de bord à 10V au lieu de 16V par rapport aux 42Volts de la tension nominale. On notera que les équipements électriques sont en général connectés en parallèle sur la batterie 40.

Comme on l'a vu plus haut, il existe plusieurs premières valeurs de seuil US1, selon que l'on verrouille une, deux ou trois branches du pont d'interrupteurs. Ainsi, dans un mode de réalisation non limitatif, une première valeur de seuil US1 est associée à chaque verrouillage spécifique du pont d'interrupteurs. Par exemple, la première valeur de seuil associée US1 sera égale à 45Volts pour une branche verrouillée, à 55Volts pour deux branches verrouillées et à 58Volts pour trois branches verrouillées.

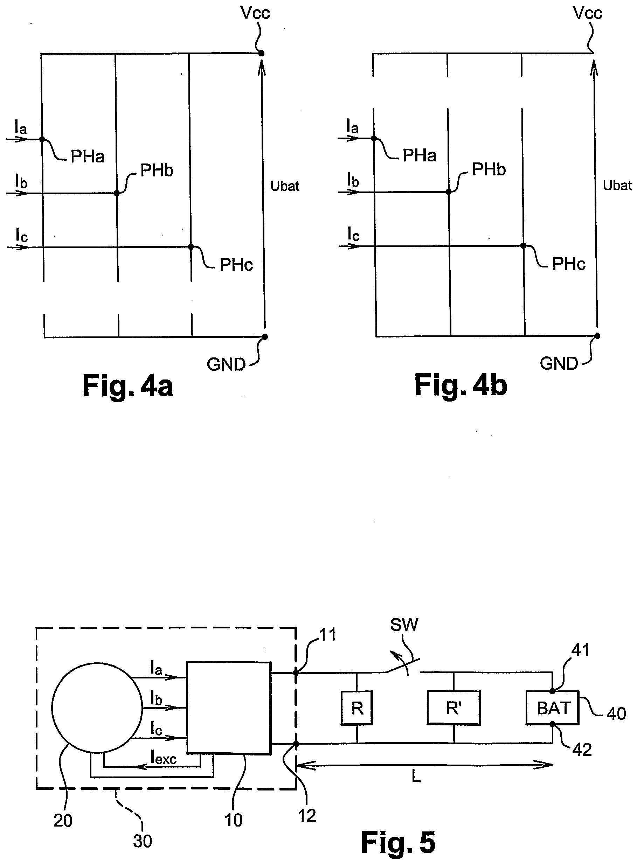

Les schémas des Fig. 4a et 4b sont les schémas électriques équivalents du circuit de puissance 15 lorsque toutes ses branches sont verrouillées. Dans la situation de la Fig. 4a, tous les transistors de puissance supérieurs sont maintenus conducteurs (circuit fermé), les transistors de puissance inférieurs étant maintenus bloqués (circuit ouvert). Dans la situation de la Fig. 4b, à l'inverse, tous les transistors de puissance inférieurs sont maintenus conducteurs, les transistors de puissance supérieurs étant maintenus bloqués.

De préférence, comme indiqué précédemment, on alterne les situations selon la Fig. 4a et la Fig. 4b, afin de répartir les pertes entre les transistors de puissance supérieurs d'une part, et les transistors de puissance inférieurs d'autre part. Dit autrement, le circuit de puissance 15 est commandé dans le mode de fonctionnement dégradé pour être dans le cas de figure de la Fig. 4a pendant une partie du temps, entre t₂ et t₃, de verrouillage des branches (idéalement la moitié du temps si les transistors sont identiques, comme il est usuel de les avoir), et dans celui de la Fig. 4b le reste du temps.

En résumé, dans le cas général d'une machine monophasée (un enroulement de phase, deux branches) ou polyphasée (N enroulements de phase, N branches, N>1), on peut ainsi verrouiller un nombre quelconque N-p de branches, où p est un nombre entier compris entre 0 et N-1, ce qui apporte une réduction du courant généré It par l'alterno-démarreur 30. Ainsi, des enroulements de phase seront court-circuités, en sorte que leur contribution au courant total généré It par l'alterno-démarreur sera nulle. On notera que la ou les branches qui ne sont pas verrouillées sont toujours pilotées par le circuit de commande 13 à la fréquence de fonctionnement Fq2.

Ainsi, par exemple, dans le cas de la configuration en triangle, lorsqu'on verrouille deux branches, un enroulement est court-circuité pendant une période de temps de verrouillage, soit 100ms, et le deuxième et troisième enroulements sont court-circuités pendant une période de temps de découpage du courant inférieure, c'est-à-dire lorsque la troisième autre branche fonctionnant à la fréquence de fonctionnement Fq2 de quelques kHz se retrouve dans le même état de conduction que les deux branches verrouillées.

Dans un autre exemple, si l'on ne verrouille qu'une seule branche, un enroulement est court-circuité pendant une période de temps de découpage du courant inférieure, c'est-à-dire lorsqu'une autre branche fonctionnant à la fréquence de fonctionnement Fq2 de quelques kHz se retrouve dans le même état de conduction que la branche verrouillée.

De retour à la Fig. 3, dans l'exemple pris, la première valeur de seuil US1 a été fixée à 58Volts. Ainsi, à l'instant t₂, on court-circuite la machine 30 en verrouillant toutes ses branches. Le courant total It généré par l'alterno-démarreur 30 est alors nul. Par conséquent, la tension Ubat décroît, en raison de la consommation de courant par les équipements électriques connectés au réseau de bord et du fait que la capacité du condensateur 15a se décharge.

La pente 202 de la tension Ubat à partir de l'instant t₂ dépend du courant consommé Ir dans le réseau de bord, et de la capacité du condensateur 15a (ainsi que des autres capacités, y compris les capacités parasites, couplées au réseau de bord).

Ainsi, dans la plage C représenté, on se trouve en mode dégradé, avec un courant généré It nul, soit It<Ir, et la capacité du condensateur 15a se décharge.
- Lorsque, à l'instant t₃, la tension Ubat atteint (par valeurs supérieures) une deuxième valeur de seuil US2, le circuit de commande 13 rétablit le fonctionnement du circuit de puissance 15 dans le mode nominal. On déverrouille toutes les branches verrouillées. On génère ainsi de nouveau un courant It.

Bien entendu, la deuxième valeur de seuil US2 est inférieure à la première valeur de seuil US1. Dans un mode de réalisation non limitatif, elle est égale à la tension nominale U0 délivrée entre les bornes d'alimentation VCC et GND du circuit de puissance 15 dans le mode nominal, c'est-à-dire 42 volts ici.

Cependant, si le courant d'excitation Iex de l'inducteur 22, qui décroît depuis l'instant t₁, est encore tel que le bilan entre le courant généré It par l'alterno-démarreur 30 et le courant consommé Ir dans le réseau de bord 50 est encore positif (It>Ir), la capacité 15a se charge avec la différence de courant It-Ir et par conséquent la tension Ubat remonte, comme on peut le voir dans l'exemple de la Fig. 3.

On notera que la pente 203 de la tension Ubat à partir de l'instant t₃ dépend de la différence (positive) entre le courant généré It par l'alterno-démarreur et le courant consommé Ir dans le réseau de bord, et de la capacité du condensateur 15a (ainsi que des autres capacités sur tous les autres composants électroniques, y compris les capacités parasites, couplées au réseau de bord). Ainsi, dans l'exemple illustré, la tension Ubat remonte jusqu'à un instant t₄ sans toutefois atteindre la valeur de seuil maximale Umax. Par conséquent, on reste dans le mode nominal.

Ainsi, dans la plage D représentée, on se trouve dans le mode nominal, It > Ir et la capacité 15a se charge.
- A l'instant t₄, le courant Iex a diminué suffisamment de sorte que le courant It fournit par l'alterno-démarreur 30 est égal au courant consommé Ir dans le réseau de bord 50. Cependant, la tension Ubat est toujours supérieure à la deuxième valeur de seuil 42Volts. Par conséquent, le circuit de commande 13 régule toujours le courant d'excitation Iex de manière à diminuer la tension Ubat.

La tension Ubat commence donc à redescendre. Le courant Iex continue de décroître entraînant une diminution du courant généré It. Le bilan entre le courant généré It par l'alterno-démarreur 30 et le courant consommé Ir dans le réseau de bord 50 devient négatif (It<Ir). La capacité du condensateur 15a se décharge donc pour alimenter les équipements électriques du réseau de bord, le courant généré It n'étant pas suffisamment important pour alimenter tous les équipements électriques.

Ainsi, dans la plage E représentée, on se trouve dans le mode nominal, Ir>It et la capacité 15a se décharge.
- Le courant Iex décroître jusqu'à ce que, à l'instant t₅, la tension Ubat atteigne par valeurs inférieures la tension nominale de U0=42 volts.
- A partir de l'instant t₅, on augmente de nouveau le courant Iex pour obtenir une tension Ubat proche de 42Volts. A ce moment, le courant généré It est égal au courant consommé Ir.
- A partir de l'instant t₆, la tension Ubat demeure relativement constante, et sensiblement égale à 42Volts. Ladite tension Ubat et le courant Iex sont ainsi stabilisés. La régulation du courant d'excitation Iex est donc terminée.

Ainsi, dans la plage G représentée, on se trouve dans le mode nominal, It = Ir, et la régulation est terminée.

Le tableau suivant résume ce qui a été décrit précédemment pour l'exemple illustré à la Fig. 3.

| | | | | |
|---|---|---|---|---|
| Plage A | Entre t0 et t1 | Mode nominal | It = Ir | |
| Plage B | Entre t1 et t2 | Mode nominal | It> Ir | Capacité se charge |
| Plage C | Entre t2 et t3 | Mode dégradé | It = 0 | Capacité se décharge |
| Plage D | Entre t3 et t4 | Mode nominal | It> Ir | Capacité se charge |
| Plage E | Entre t4 et t5 | Mode nominal | It < Ir | Capacité se décharge |
| Plage F | Entre t5 et t6 | Mode nominal | It = Ir | |
| Plage G | A partir de t6 | Mode nominal | It = Ir | |

La Fig. 5 illustre un montage réalisé en pratique pour tester le fonctionnement d'un module de commande et de puissance 10 selon la présente invention.

Les essais ont été réalisés avec un alterno-démarreur comprenant une partie électromécanique standard et un circuit de commande et de puissance selon la présente invention. La batterie a été remplacée par un condensateur ("Supercap") de 150 F. Le réseau de bord comprend une charge résistive R correspondant à un consommateur de 40 A en sortie de l'alterno-démarreur, suivi d'une charge électronique R' correspondant à un consommateur de 80 A. Un interrupteur SW est placé entre les charges R et R' pour simuler une déconnexion d'une batterie plus un consommateur ou d'une batterie seule déchargée. La première valeur de seuil US1 est fixée à 52 V. La deuxième valeur de seuil US2 est fixée à 40 V. La longueur totale L des liaisons correspondant au réseau de bord est de 4 m environ. Le délestage de charge est créé par l'ouverture de l'interrupteur SW.

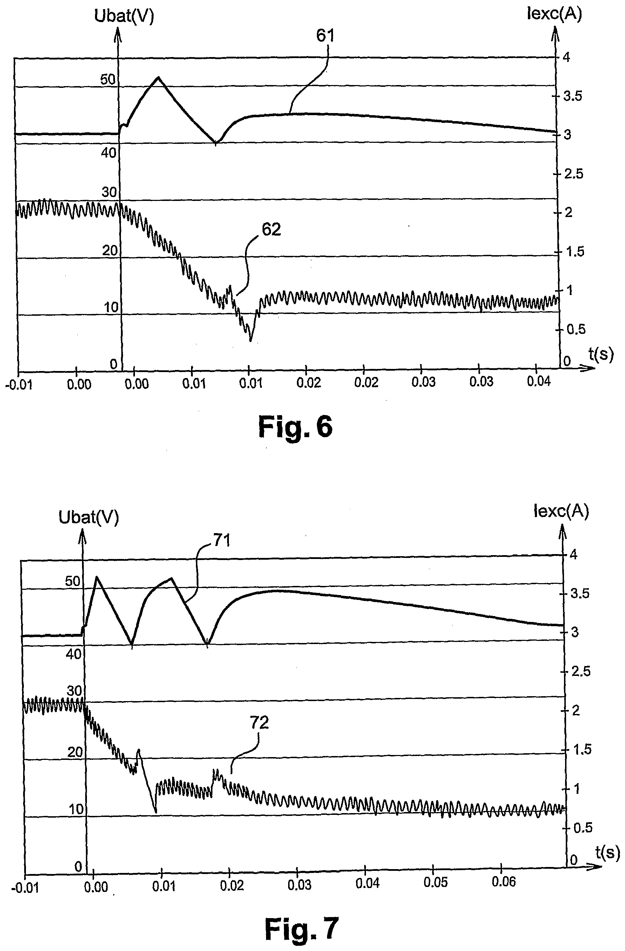

Le premier essai (Fig. 6) a été réalisé avec un courant dans la charge électronique R' égal à environ 80 A. La courbe 61 et la courbe 62 donnent respectivement la tension Ubat et le courant Iex en fonction du temps. Ici, la tension Umax est atteinte une fois. Le circuit de puissance 15 est donc commandé dans le mode dégradé une fois, environ entre t=5 ms et t=15 ms, avec toutes ses branches verrouillées.

Le second essai (Fig. 7) a été réalisé avec un courant dans la charge électronique R' égal à environ 120 A. La courbe 71 et la courbe 72 donnent respectivement la tension Ubat et le courant Iex en fonction du temps. Ici, la tension Umax est atteinte deux fois. Le circuit de puissance 15 est commandé dans le mode dégradé une première fois, environ entre t=1 ms et t=6 ms, puis une seconde fois, environ entre t=12 ms et t=17 ms, avec toutes ses branches verrouillées.

Ainsi, le module de commande et de puissance selon l'invention présente de nombreux avantages qui sont notamment les suivants :
Premièrement, il n'est plus nécessaire, comme dans l'état de la technique antérieur, d'utiliser une grande quantité de MOSFET en parallèle afin de maintenir un écrêtage le temps de désexcitation du courant d'excitation Iex. De plus, il n'est plus nécessaire d'utiliser des MOSFETS spécifiques qui écrêtent pendant un temps donné correspondant au temps de désexcitation du courant d'excitation Iex.
Deuxièmement, il n'est plus nécessaire de se limiter à des MOSFET ayant une valeur d'écrêtage précise. De ce fait, on s'affranchit de la difficulté d'obtenir une valeur d'écrêtage très précise, ladite valeur étant fonction de paramètres variables tels que la température.
Troisièmement, on n'utilise pas de composants additionnels.
Quatrièmement, on protège l'électronique du circuit de puissance contre les délestages de charge de sorte que les transistors de puissance ne peuvent plus griller. Ils sont moins sollicités car dans le cadre de l'invention, la fonction d'écrêtage de la tension n'est plus effectuée par lesdits transistors.

## Revendications

1. Module de commande et de puissance (10) pour machine électrique tournante (30) comprenant une pluralité d'enroulements de phases (21a, 21b, 21c), ledit module comprenant :
- un circuit de puissance (15) comprenant une pluralité de branches (Ba, Bb, Bc) destinées à être associées à ladite pluralité d'enroulement de phases (21a, 21b, 21c), et
- un circuit de commande (13) construit pour piloter ledit circuit de puissance (15) lorsque la machine fonctionne dans un mode nominal;
le circuit de commande (13) est construit pour, en outre :
- surveiller une tension (Ubat) de sortie dudit circuit de puissance (15);
- verrouiller au moins une branche dudit circuit de puissance (15) dans un état de conduction lorsque ladite tension de sortie (Ubat) atteint une au moins première valeur de seuil (US1) de sorte que ladite machine fonctionne dans un mode dégradé,
**caractérisé en ce que** le circuit de puissance (15) comprend en outre des moyens d'accumulation d'énergie (15a), lesdits moyens d'accumulation d'énergie étant un condensateur,
et **en ce que** le circuit de commande (13) est adapté pour, lors d'un verrouillage d'une branche, maintenir ladite branche dans un premier état de conduction pendant une partie du temps de verrouillage, et maintenir ladite branche dans un deuxième état de conduction pendant le reste du temps de verrouillage.

2. Module de commande et de puissance selon la revendication 1, dans lequel le circuit de commande (13) est construit pour, en outre :
- rétablir le fonctionnement de la machine (30) dans le mode nominal, lorsque ladite tension de sortie (Ubat) atteint une deuxième valeur de seuil (US2).

3. Module de commande et de puissance selon l'une des revendications précédentes, dans lequel le circuit de commande (13) est construit pour verrouiller toutes les branches du circuit de puissance (15) lorsque ladite tension de sortie (Ubat) atteint une première valeur de seuil (US1).

4. Module de commande et de puissance selon la revendication 2, dans lequel ladite au moins première valeur de seuil (US1) est supérieure à ladite deuxième valeur de seuil (US2).

5. Module de commande et de puissance selon la revendication 2, dans lequel la deuxième valeur de seuil (US2) est sensiblement égale à une valeur nominale (U0) d'une tension qui est délivrée par le circuit de puissance (15) dans le mode nominal.

6. Module de commande et de puissance selon l'une quelconque des revendications précédentes, dans lequel ladite au moins première valeur de seuil (US1) est inférieure à une tension de destruction d'équipements électriques destinés à être alimentés par la tension de sortie (Ubat) du circuit de puissance (15).

7. Module de commande et de puissance selon l'une quelconque des revendications précédentes, dans lequel ladite au moins une branche du circuit de puissance (15) comporte deux interrupteurs (MHS, MLS), et dans lequel dans un état de conduction de ladite branche, un des interrupteurs (MHS) est conducteur et l'autre interrupteur (MLS) est bloqué.

8. Module de commande et de puissance selon l'une quelconque des revendications précédentes, dans lequel le circuit de commande (13) est adapté pour maintenir toutes les branches du circuit de puissance (15) qui sont verrouillées dans un même état de conduction.

9. Module de commande et de puissance selon l'une quelconque des revendications précédentes, dans lequel un interrupteur comporte au moins un transistor de puissance (MOS).

10. Module de commande et de puissance selon l'une quelconque des revendications précédentes, dans lequel le verrouillage de ladite au moins une branche s'effectue à une fréquence de verrouillage (Fq1) inférieure à une fréquence de fonctionnement (Fq2) du circuit de puissance (15) en mode nominal.

11. Machine électrique tournante (30) réversible polyphasée comprenant un module de commande et de puissance (10) selon l'une quelconque des revendications précédentes.

## Patentansprüche

1. Steuerungs- und Leistungsmodul (10) für rotierende elektrische Maschine (30) mit mehreren Phasenwicklungen (21a, 21b, 21c), wobei das Modul Folgendes umfasst:
- eine Leistungsschaltung (15), die mehrere Zweige (Ba, Bb, Bc) enthält, die dazu bestimmt sind, den mehreren Phasenwicklungen (21a, 21b, 21c) zugeordnet zu werden, und
- eine Steuerschaltung (13), die zum Steuern der Leistungsschaltung (15) ausgebildet ist, wenn die Maschine in einer Nennbetriebsart arbeitet;
wobei die Steuerschaltung (13) außerdem ausgebildet ist zum:
- Überwachen einer Ausgangsspannung (Ubat) der Leistungsschaltung (15);
- Verriegeln wenigstens eines Zweigs der Leistungsschaltung (15) in einem leitenden Zustand, wenn die Ausgangsspannung (Ubat) wenigstens einen ersten Schwellenwert (US1) erreicht, derart, dass die Maschine in einer herabgesetzten Betriebsart arbeitet, **dadurch gekennzeichnet, dass**
die Leistungsschaltung (15) außerdem Energiespeichermittel (15a) umfasst, wobei die Energiespeichermittel ein Kondensator sind, und
dass die Steuerschaltung (13) dafür ausgelegt ist, bei einer Verriegelung eines Zweigs diesen Zweig während eines Teils der Verriegelungszeit in dem ersten leitenden Zustand zu halten und ihn während der restlichen Verriegelungszeit in einem zweiten leitenden Zustand zu halten.

2. Steuerungs- und Leistungsmodul nach Anspruch 1, wobei die Steuerschaltung (13) außerdem ausgebildet ist zum:
- Wiederherstellen der Funktion der Maschine (30) in der Nennbetriebsart, wenn die Ausgangsspannung (Ubat) einen zweiten Schwellenwert (US2) erreicht.

3. Steuerungs- und Leistungsmodul nach einem der vorhergehenden Ansprüche, wobei die Steuerschaltung (13) ausgebildet ist, um sämtliche Zweige der Leistungsschaltung (15) zu verriegeln, wenn die Ausgangsspannung (Ubat) einen ersten Schwellenwert (US1) erreicht.

4. Steuerungs- und Leistungsmodul nach Anspruch 2, wobei der wenigstens eine erste Schwellenwert (US1) größer als der zweite Schwellenwert (US2) ist.

5. Steuerungs- und Leistungsmodul nach Anspruch 2, wobei der zweite Schwellenwert (US2) im Wesentlichen gleich einem Nennwert (U0) einer Spannung ist, die von der Leistungsschaltung (15) in der Nennbetriebsart geliefert wird.

6. Steuerungs- und Leistungsmodul nach einem der vorhergehenden Ansprüche, wobei der wenigstens eine erste Schwellenwert (US1) kleiner als eine Spannung für die Zerstörung elektrischer Geräte ist, die mit der Ausgangsspannung (Ubat) der Leistungsschaltung (15) versorgt werden sollen.

7. Steuerungs- und Leistungsmodul nach einem der vorhergehenden Ansprüche, wobei der wenigstens eine Zweig der Leistungsschaltung (15) zwei Unterbrecher (MHS, MLS) enthält und wobei in einem leitenden Zustand des Zweigs einer der Unterbrecher (MHS) leitend ist und der andere Unterbrecher (MLS) gesperrt ist.

8. Steuerungs- und Leistungsmodul nach einem der vorhergehenden Ansprüche, wobei die Steuerschaltung (13) dafür ausgelegt ist, sämtliche Zweige der Leistungsschaltung (15), die verriegelt sind, in einem leitenden Zustand zu halten.

9. Steuerungs- und Leistungsmodul nach einem der vorhergehenden Ansprüche, wobei der Unterbrecher wenigstens einen Leistungstransistor (MOS) enthält.

10. Steuerungs- und Leistungsmodul nach einem der vorhergehenden Ansprüche, wobei die Verriegelung des wenigstens einen Zweigs mit einer Verriegelungsfrequenz (Fq1) erfolgt, die niedriger als eine Betriebsfrequenz (Fq2) der Leistungsschaltung (15) in der Nennbetriebsart ist.

11. Umkehrbare, mehrphasige rotierende elektrische Maschine (30), die ein Steuerungs- und Leistungsmodul (10) nach einem der vorhergehenden Ansprüche enthält.

## Claims

1. Power and control module (10) for a rotary electric machine (30) comprising a plurality of phase windings (21a, 21b, 21c), said module comprising:
- a power circuit (15) comprising a plurality of branches (Ba, Bb, Bc) that are intended to be associated with said plurality of phase windings (21a, 21b, 21c); and
- a control circuit (13) designed to drive said power circuit (15) when the machine is operating in a nominal mode;
the control circuit (13) is further designed:
- to monitor an output voltage (Ubat) of said power circuit (15);
- to lock at least one branch of said power circuit (15) in a conducting state when said output voltage (Ubat) reaches at least a first threshold value (US1) such that said machine operates in a degraded mode, **characterized**
**in that** the power circuit (15) further comprises energy accumulation means (15a), said energy accumulation means being a capacitor,
and **in that** the control circuit (13) is suitable for, when locking a branch, keeping said branch in a first conducting state for part of the locking time, and keeping said branch in a second conducting state for the rest of the locking time.

2. Power and control module according to Claim 1, wherein the control circuit (13) is further designed:
- to reset the operation of the machine (30) to nominal mode when said output voltage (Ubat) reaches a second threshold value (US2).

3. Power and control module according to either of the preceding claims, wherein the control circuit (13) is designed to lock all of the branches of the power circuit (15) when said output voltage (Ubat) reaches a first threshold value (US1).

4. Power and control module according to Claim 2, wherein said at least a first threshold value (US1) is higher than said second threshold value (US2).

5. Power and control module according to Claim 2, wherein the second threshold value (US2) is substantially equal to the nominal value (U0) of a voltage that is delivered by the power circuit (15) in nominal mode.

6. Power and control module according to any one of the preceding claims, wherein said at least a first threshold value (US1) is lower than a voltage liable to destroy items of electrical equipment that are intended to be supplied with power by the output voltage (Ubat) of the power circuit (15).

7. Power and control module according to any one of the preceding claims, wherein said at least one branch of the power circuit (15) includes two switches (MHS, MLS), and wherein, when said branch is in a conducting state, one of the switches (MHS) is closed and the other switch (MLS) is open.

8. Power and control module according to any one of the preceding claims, wherein the control circuit (13) is suitable for keeping all of the branches of the power circuit (15) that are locked in one and the same conducting state.

9. Power and control module according to any one of the preceding claims, wherein a switch includes at least one power transistor (MOS).

10. Power and control module according to any one of the preceding claims, wherein the locking of said at least one branch occurs at a locking frequency (Fq1) that is lower than an operating frequency (Fq2) of the power circuit (15) in nominal mode.

11. Polyphase reversible rotary electric machine (30) comprising a power and control module (10) according to any one of the preceding claims.
